# DEMANDE DE BREVET EUROPEEN

(11) **EP 1 202 109 A1**
(43) Date de publication de la demande: **02.05.2002**
(21) Numéro de dépôt: 00203676.2
(22) Date de dépôt: 24.10.2000
(51) Int. Cl.: G02F 1/1347

(54) **Dispositif d'affichage à cristaux liquides à coefficient de réflexion de la lumière élevé**

(71) Demandeur: ASULAB S.A., CH-2501 Bienne (CH)
(72) Inventeur: Grupp, Joachim, 2073 Enges (CH)
(74) Mandataire: Barbeaux, Bernard

(57) **Abrégé**

La présente invention concerne un dispositif optique à réflexion de Bragg pour réfléchir au moins une première et une deuxième parties du spectre visible correspondant à des couleurs (λ₃) et (λ₄) déterminées présentes dans une lumière incidente, caractérisé en ce qu'il comprend au moins un premier film (12) formé d'un mélange d'une première et d'une seconde pluralités de capsules d'un cristal liquide cholestérique (CL₁₂ₐ, CL_{12b}), et au moins un second film (14) formé d'une troisième et d'une quatrième pluralités de capsules de cristal liquide cholestérique (CL₁₄ₐ, CL_{14b}), les cristaux liquides (CL₁₂ₐ, CL_{12b}) présentant une structure périodique en hélice dont la valeur du pas est ajustée de façon à ce que ces cristaux liquides (CL₁₂ₐ, CL_{12b}) réfléchissent une bande de longueurs d'ondes correspondant à une première couleur (λ₃) déterminée, et les cristaux liquides (CL₁₄ₐ, CL_{14b}) présentant une structure périodique en hélice dont la valeur du pas est ajustée de façon à ce que ces cristaux liquides (CL₁₄ₐ, CL_{14b}) réfléchissent une bande de longueurs d'ondes correspondant à une seconde couleur (λ₄) déterminée.

## Description

La présente invention a pour objet un dispositif d'affichage à cristaux liquides présentant un coefficient de réflexion de la lumière suffisamment élevé pour permettre aux caractères affichés d'être très lumineux et de bien se détacher du fond sur lequel ils s'affichent.

Pour rendre les caractères affichés par une cellule d'affichage plus lisibles, une technique connue consiste à éclairer ces caractères par l'arrière de la cellule. Ces cellules d'affichage dites rétroéclairées ont néanmoins comme inconvénient de consommer beaucoup d'énergie, ce qui les rend difficiles à utiliser dans des objets portatifs de faibles dimensions tels qu'une montre.

On cherche donc sans cesse à améliorer les propriétés réfléchissantes des cellules d'affichage telles que, notamment, celles à cristaux liquides. Ainsi, l'emploi d'un réflecteur dans le cas des cellules à cristaux liquides permet d'utiliser la lumière incidente pour rendre les caractères affichés plus lumineux et leur permettre de mieux se détacher du fond sur lequel ils s'affichent.

La plupart des cellules à cristaux liquides sont toutefois sensibles à la polarisation de la lumière. Tel est le cas, notamment, des cellules à cristaux liquides nématiques en hélice, mieux connus sous leur dénomination anglaise "Twist Nematic" ou "TN". Ces cellules TN comprennent classiquement un polariseur absorbant placé devant ladite cellule, et un polariseur réfléchissant place derrière cette même cellule et dont la direction de polarisation est perpendiculaire à celle du polariseur absorbant. Une première composante linéaire de la lumière est donc absorbée par le polariseur absorbant placé devant la cellule, tandis que la seconde composante de la lumière, perpendiculaire à la première, est transmise à la cellule TN. Dans la cellule TN, la direction de polarisation de la lumière transmise est tournée de 90°, de sorte que cette lumière est réfléchie par le polariseur réfléchissant placé derrière la cellule, puis effectue le même trajet, mais en sens inverse, à travers la cellule et le polariseur absorbant. La quantité de lumière réfléchie par une cellule TN est donc au plus, aux portes optiques près, de l'ordre de 50% de la quantité de lumière incidente.

Il existe également des cellules à cristaux liquides dépourvues de polariseurs. C'est le cas, par exemple, des cellules à cristaux liquides à texture cholestérique éventuellement stabilisés par un polymère, mieux connus sous leur dénomination anglaise "Polymer Stabilized Cholesteric Texture" ou "PSCT".

On rappelle que la caractéristique de certains cristaux liquides de type cholestérique est de présenter une structure périodique en hélice qui ne réfléchit, par réflexion de Bragg, que la lumière qui a la polarisation circulaire ayant le même sens de rotation que celui du cristal liquide. Ainsi, un cristal liquide cholestérique ayant un sens d'hélice à droite réfléchira la lumière polarisée circulairement à droite, tandis qu'il laissera passer sans modification la lumière polarisée circulairement à gauche. Inversement, un cristal cholestérique ayant un sens d'hélice à gauche réfléchira la lumière polarisée circulairement à gauche. On notera que, dans la suite de la description, le coefficient de réflexion est, aux pertes optiques près, sensiblement égal à 1 quand la lumière d'une polarisation circulaire est complètement réfléchie, ce qui équivaut à un taux de réflexion de la lumière incidente de l'ordre de 50%.

Pour tenter de réfléchir totalement la lumière incidente, il a déjà été proposé de disposer deux cellules à cristaux liquides cholestériques respectivement supérieure et inférieure l'une au-dessus de l'autre, l'hélice du cristal liquide cholestérique contenu dans la cellule supérieure ayant un premier sens de rotation, tandis que l'hélice du cristal liquide cholestérique contenu dans la cellule inférieure a un second sens de rotation opposé au premier. Ainsi, la lumière qui a la polarisation circulaire ayant le même sens de rotation que celui du cristal liquide contenu dans la cellule supérieure sera réfléchie par ladite cellule supérieure, et la lumière qui a la polarisation complémentaire sera transmise sans modification par la cellule supérieure et sera réfléchie par la cellule inférieure. On atteint ainsi un taux de réflexion de la lumière qui, aux pertes optiques près, est voisin de 100%.

Un tel mode de réalisation présente cependant certains inconvénients. La double structure formée par les deux cellules superposées présente une certaine épaisseur, ce qui la rend assez difficile à intégrer dans un objet de faibles dimensions tel qu'une montre. D'autre part, le module de connexion et d'adressage qui permet de relier les deux cellules à un circuit électronique de commande destiné à gérer leur fonctionnement est complexe, dans la mesure où le nombre de pistes conductrices à connecter est important. Enfin, les coûts de fabrication sont sensiblement multipliés par deux puisqu'il faut prévoir deux cellules au lieu d'une seule, ce qui va à l'encontre des préoccupations de coût, d'encombrement et de rationalité qui sont habituelles dans l'industrie.

Un autre inconvénient du mode de réalisation décrit ci-dessus réside dans le fait qu'il ne peut réfléchir qu'une seule bande de longueurs d'ondes centrée sur une longueur d'onde correspondant à une couleur déterminée du spectre visible. En effet, comme on le sait, la structure périodique en hélice des cristaux liquides cholestériques a un pas qui peut être ajusté et qui détermine la bande de réflexion, c'est-à-dire la gamme de longueurs d'ondes, que le cristal liquide peut réfléchir par réflexion de Bragg.

Par conséquent, pour pouvoir réfléchir deux longueurs d'ondes distinctes, il faut superposer quatre cellules. Un tel mode de réalisation est représenté à la figure 1 annexée à la présente demande de brevet qui est une vue en coupe dans un tel dispositif de l'art antérieur.

On notera que, dans tout ce qui suit, on désignera par λ la longueur d'onde autour de laquelle est centrée la bande de longueurs d'ondes réfléchie par un cristal liquide cholestérique. λ(R) désignera la lumière polarisée circulairement à droite (la lettre "R" signifiant "Right" en abrégé), et λ(L) désignera la lumière polarisée circulairement à gauche (la lettre "L" signifiant "Left" en abrégé).

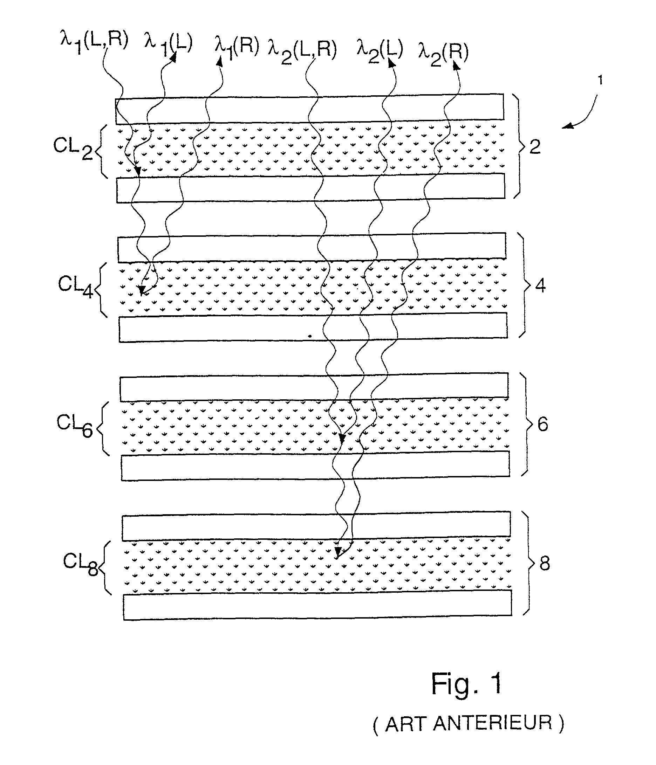

Le dispositif optique représenté sur la figure 1 et désigné dans son ensemble par la référence numérique générale 1 est destiné à réfléchir 100% d'une première et d'une deuxième bandes de longueurs d'ondes correspondant chacune à une couleur déterminée, respectivement λ₁ et λ₂. A cet effet, il comporte quatre cellules superposées 2, 4, 6 et 8, la cellule 2 étant disposée sur le dessus de cet empilement, et la cellule 8 étant située à la base dudit empilement. Chacune de ces quatre cellules 2, 4, 6 et 8 comprend un film ou couche de cristaux liquides à texture cholestérique, respectivement CL₂, CL₄, CL₆ et CL₈. La valeur du pas de l'hélice des cristaux liquides CL₂ et CL₄ a été ajustée de façon à ce qu'ils réfléchissent la longueur d'onde λ₁. De même, la valeur du pas de l'hélice des cristaux liquides CL₆ et CL₈ a été ajustée de façon à ce qu'ils réfléchissent la longueur d'onde λ₂.

Plus précisément, l'hélice du cristal liquide cholestérique CL₂ contenu dans la cellule supérieure 2 a un premier sens de rotation arbitrairement choisi, par exemple à gauche, et l'hélice du cristal liquide cholestérique CL₄ contenu dans la cellule 4 a un second sens de rotation opposé au premier, c'est-à-dire à droite dans le présent exemple.

Par ailleurs, l'hélice du cristal liquide cholestérique CL₆ contenu dans la cellule 6 a un premier sens de rotation arbitrairement choisi, par exemple à gauche, et l'hélice du cristal liquide cholestérique CL₈ contenu dans la cellule inférieure 8 a un second sens de rotation opposé au premier, c'est-à-dire à droite dans le présent exemple.

La couche de cristal liquide CL₂ va donc réfléchir la lumière λ₁ qui a la polarisation circulaire ayant un sens de rotation identique à celui dudit cristal liquide CL₂ contenu dans la cellule supérieure 2. En l'occurrence, c'est la polarisation circulaire à gauche λ₁(L) de la lumière qui va être réfléchie par la couche de cristal liquide CL₂. Quant à la lumière polarisée circulairement à droite λ₁(R), elle est transmise sans modification par la couche de cristal liquide CL₂ et va être réfléchie par la couche de cristal liquide CL₄ contenu dans la cellule 4 dont l'hélice a un sens de rotation à droite.

Comme on l'aura compris, les couches de cristal liquide CL₂ et CL₄ sont sans effet sur la bande de longueurs d'ondes correspondant à la couleur λ₂. Par conséquent, la lumière λ₂ va traverser les cellules 2 et 4 sans modification, et être réfléchie par les cellules 6 et 8. En effet, la couche de cristal liquide CL₆ va réfléchir la lumière λ₂ (L) qui a la polarisation circulaire ayant un sens de rotation identique a celui dudit cristal liquide CL₆ contenu dans la cellule 6, en l'occurrence la lumière polarisée circulairement à gauche, tandis que la lumière polarisée circulairement à droite λ₂(R) va traverser sans modification la couche de cristal liquide CL₆ et être réfléchie par la couche de cristal liquide CL₈ dont la structure périodique en hélice a un sens de rotation à droite.

En conséquence, le dispositif de l'art antérieur permet, au moyen de quatre cellules superposées 2, 4, 6 et 8 de réfléchir, aux pertes optiques près, 100% d'une première et d'une deuxième bandes de longueurs d'ondes correspondant chacune à une couleur λ₁ et λ₂ déterminée. On comprendra toutefois qu'un tel dispositif est très encombrant et particulièrement coûteux à produire.

Une amélioration notable a été apportée par le dispositif décrit dans le document US 5,463,482 où a été proposée une construction qui comprend une unique cellule à cristaux liquides capable de réfléchir la plus grande partie d'une lumière incidente.

Ce dispositif optique à réflexion de Bragg permet de réfléchir au moins une partie du spectre visible correspondant à une couleur déterminée présente dans une lumière incidente. A cet effet, il comprend un film formé d'un mélange d'au moins une première et une seconde pluralités de capsules d'un cristal liquide de type cholestérique, le cristal liquide cholestérique contenu dans la première pluralité de capsules présentant une structure périodique en hélice ayant un premier sens de rotation, et le cristal liquide cholestérique contenu dans la seconde pluralité de capsules présentant une structure périodique en hélice ayant un second sens de rotation opposé au premier. Ainsi, la première pluralité de capsules réfléchit la lumière qui a la polarisation circulaire ayant le même sens de rotation que celui du cristal liquide contenu dans ladite première pluralité de capsules, et la seconde pluralité de capsules réfléchit la lumière qui a la polarisation circulaire ayant un sens de rotation identique à celui du cristal liquide contenu dans ladite seconde pluralité de capsules et, par conséquent, opposé au sens de rotation de la polarisation circulaire de la lumière réfléchie par la première pluralité de capsules, de sorte que la majeure partie du spectre visible correspondant à la couleur déterminée est réfléchie par le film.

Avec une telle structure, les deux polarisations circulaires gauche et droite d'une même partie du spectre visible correspondant à une couleur déterminée sont simultanément réfléchies par le film de cristaux liquides cholestériques. Le taux de réflexion de la lumière incidente est ainsi, aux pertes optiques près, voisin de 100%. On obtient donc un affichage lumineux et se détachant avec netteté du fond sur lequel il s'affiche, sans qu'il soit nécessaire d'éclairer cet affichage par l'arrière du dispositif optique comme cela était le cas dans l'art antérieur. On réalise ainsi des économies substantielles en termes de consommation électrique.

Ce résultat est rendu possible par le fait que les cristaux liquides présentant respectivement une structure périodique en hélice ayant un premier sens de rotation et un second sens de rotation opposé au premier ne sont pas intimement mélangés au sein du film, mais séparés les uns des autres par la membrane des capsules qui les entourent. Si tel n'était pas le cas, c'est-à-dire si les cristaux liquides à hélice droite et à hélice gauche étaient mélangés sans précaution, la structure chirale de ces cristaux liquides disparaîtrait et on n'obtiendrait qu'un mélange nématique n'ayant plus la capacité de réfléchir la lumière selon le principe de réflexion de Bragg.

Comme on l'aura compris, un seul film ou couche de cristaux liquides suffit pour réfléchir pratiquement toute la bande du spectre visible correspondant à une couleur donnée. Un tel film se substitue aux deux couches superposées de cristaux liquides cholestériques à hélice droite et à hélice gauche qui étaient utilisées antérieurement pour obtenir un résultat analogue. En conséquence, le dispositif optique décrit dans le document susmentionné est plus mince et donc plus facile à intégrer dans des objets portatifs de petites dimensions tels qu'une pièce d'horlogerie.

Le dispositif optique décrit dans le document US 5,463,482 comprend classiquement une cellule contenant ledit film de cristal liquide, ladite cellule comportant des premier et deuxième substrats et un cadre de scellement qui délimitent une cavité contenant ledit film. Ce dispositif comporte en outre deux groupes d'électrodes disposées respectivement de part et d'autre du film et un circuit de commande connecté auxdites électrodes et agencé pour fournir sélectivement à ces électrodes des tensions de commande, de manière à faire passer le cristal liquide d'un premier état dans lequel il réfléchit la lumière de ladite partie du spectre visible, à un deuxième état dans lequel il est transparent à cette lumière, et réciproquement.

Comme il n'est plus nécessaire de fabriquer qu'une seule cellule au lieu des deux précédentes, les coûts de production s'en trouvent diminués. De même, la consommation électrique est sensiblement réduite de moitié et la connectique de la cellule est moins complexe que celle de deux cellules superposées.

Le dispositif optique susmentionné présente cependant un sérieux inconvénient. En effet, ce dispositif optique est destiné à procurer un affichage blanc sur fond noir, mieux connu sous sa dénomination anglo-saxonne "paper-white". Le document US 5,463,482 qui a pour but d'obtenir un affichage de couleur blanche aussi proche que possible de celle de la lumière naturelle propose, à cet effet, de mélanger une première, une seconde et une troisième pluralités de capsules d'un cristal liquide cholestérique présentant, respectivement, une bande de réflexion dans la partie rouge du spectre visible, une bande de réflexion dans la partie verte du spectre visible, et une bande de réflexion dans la partie bleue du spectre visible. On peut ainsi obtenir un dispositif optique réfléchissant une lumière blanche proche de la lumière naturelle et résultant de la combinaison des bandes de réflexion rouge, verte et bleue.

Le problème se poserait néanmoins dans des termes sensiblement différents si l'on souhaitait obtenir, non pas un affichage blanc sur noir, mais un affichage en couleur. Dans ce cas, on ne pourrait plus mélanger indistinctement les capsules de cristal liquide réfléchissant le bleu, le vert et le rouge. Il faudrait, au contraire, former des groupes de trois éléments d'affichage élémentaires ou pixels, chaque pixel comprenant une électrode de commande et une contre-électrode entre lesquelles serait déposée soit une couche de capsules de cristal liquide cholestérique réfléchissant le bleu, soit une couche de capsules de cristal liquide cholestérique réfléchissant le vert, soit une couche de capsules de cristal liquide cholestérique réfléchissant le rouge.

On comprend aisément qu'un tel mode de réalisation serait extrêmement difficile à mettre en oeuvre. Il faudrait, tout d'abord, former électrodes de commande et contre-électrodes sur les faces en regard des premier et deuxième substrats que comporte la cellule d'affichage, puis déposer, sur chaque contre-électrode ou pixel, la couche de capsules de cristal liquide réfléchissant au choix le bleu, le vert ou le rouge qui lui correspond. Ces opérations de fabrication, longues, fastidieuses et exigeant une grande précision dans le dépôt des couches, feraient croître le prix de revient d'une cellule d'affichage couleur ainsi obtenue à des niveaux inacceptables du point de vue industriel. D'autre part, lorsque différents types de cristaux liquides sont enfermés dans une même cellule, l'épaisseur de cette cellule doit être augmentée afin de pouvoir être sûr qu'un rayon de lumière incident va pouvoir traverser au moins une capsule de chacun des types de cristaux liquides présents dans ladite cellule. Ceci conduit à une augmentation de la tension de commutation des cristaux liquides, dans la mesure où cette tension est à peu de chose près proportionnelle à l'épaisseur de la cellule.

C'est pourquoi la présente invention a pour but principal de remédier aux inconvénients susmentionnés ainsi qu'à d'autres encore en proposant un dispositif optique permettant l'affichage de données en couleur qui soit à la fois peu encombrant et peu coûteux à fabriquer.

A cet effet, la présente invention concerne un dispositif optique à réflexion de Bragg pour réfléchir au moins une première et une seconde parties du spectre visible correspondant chacune à une couleur déterminée présente dans une lumière incidente, caractérisé en ce qu'il comprend au moins un premier film formé d'un mélange d'une première et d'une seconde pluralités de capsules d'un cristal liquide cholestérique, et au moins un second film formé d'un mélange d'une troisième et d'une quatrième pluralités de capsules d'un cristal liquide cholestérique, les cristaux liquides contenus respectivement dans la première et dans la seconde pluralités de capsules présentant une structure périodique en hélice dont la valeur du pas est ajustée de façon que lesdits cristaux liquides réfléchissent la bande de longueurs d'ondes centrée sur la longueur d'onde correspondant à la première couleur déterminée, et les cristaux liquides contenus respectivement dans la troisième et la quatrième pluralités de capsules présentant une structure périodique en hélice dont la valeur du pas est ajustée de façon que lesdits cristaux liquides réfléchissent la bande de longueurs d'ondes centrée sur la longueur d'onde correspondant à la seconde couleur déterminée, la structure périodique en hélice du cristal liquide cholestérique contenu dans ladite première pluralité de capsules ayant un sens de rotation donné, et la structure périodique en hélice du cristal liquide cholestérique contenu dans ladite seconde pluralité de capsules ayant un sens de rotation opposé à celui du cristal liquide cholestérique contenu dans la première pluralité de capsules, de même que la structure périodique en hélice du cristal liquide cholestérique contenu dans ladite troisième pluralité de capsules a un sens de rotation donné, et que la structure périodique en hélice du cristal liquide cholestérique contenu dans ladite quatrième pluralité de capsules a un sens de rotation opposé à celui du cristal liquide cholestérique contenu dans la troisième pluralité de capsules.

Grâce à ces caractéristiques, la présente invention procure un dispositif d'affichage capable de réfléchir la majeure partie des polarisations circulaires gauche et droite d'une première et d'une seconde bandes de longueurs d'ondes correspondant chacune à une couleur déterminée. Par rapport à l'art antérieur, on double sensiblement la quantité de lumière réfléchie par le dispositif optique, tout en conservant le même nombre de cellules. Les caractères affichés sont donc beaucoup plus lumineux et plus contrastés, et se détachent facilement du fond sur lequel ils s'affichent. D'autre part, l'affichage de données se fait en couleur, sans qu'il soit pour cela nécessaire de former un schéma complexe d'électrodes de commande et de contre-électrodes sur lesquelles il faudrait ensuite venir déposer la couche de capsules de cristal liquide cholestérique correspondante. La présente invention permet ainsi de simplifier et, par conséquent, de diminuer sensiblement le temps de fabrication, ce qui a, bien entendu, un impact favorable sur le prix de revient du dispositif optique conforme à l'invention. Enfin, il faut bien comprendre que si l'on cherchait à produire un dispositif d'affichage couleur à l'aide des enseignements fournis par le brevet US 5,463,482, on obtiendrait une cellule dont environ un tiers des pixels d'affichage serait recouvert d'une couche de capsules de cristal liquide cholestérique réfléchissant le bleu, un autre tiers serait recouvert d'une couche de capsules de cristal liquide réfléchissant le vert, et le dernier tiers serait recouvert de capsules de cristal liquide réfléchissant le rouge. Dans ces conditions, si l'on fournissait sélectivement aux électrodes une tension de commande pour faire passer, par exemple, les seules capsules de cristal liquide cholestérique réfléchissant la gamme de longueurs d'ondes correspondant à la couleur bleue, d'un état dans lequel ces cristaux liquides sont transparents, à un état dans lequel ils réfléchissent ladite lumière bleue, le dispositif d'affichage apparaîtrait sensiblement noir à la vue d'un observateur.

Selon une caractéristique complémentaire de l'invention, l'indice de réfraction ordinaire du cristal liquide cholestérique est sensiblement égal à l'indice de réfraction des capsules qui est lui-même sensiblement égal à l'indice de réfraction du polymère dans lequel sont dispersées lesdites capsules.

Cette condition permet d'assurer que les films formés par les capsules de cristaux liquides cholestériques sont suffisamment transparents dans l'état dans lequel les cristaux liquides contenus dans lesdites capsules sont transparents. En effet, sans cette précaution, on estime qu'environ 20% de la lumière incidente serait diffusée par chaque couche de capsules de cristal liquide. Ainsi, dans le cas où l'on a, par exemple, trois films de capsules de cristal liquide cholestérique superposées, le premier de ces films réfléchissant la gamme de longueurs d'ondes centrée sur la couleur bleue du spectre visible, le second réfléchissant la couleur verte, et le troisième réfléchissant la gamme de longueurs d'ondes correspondant à la couleur rouge, seulement 64%, c'est-à-dire environ les deux tiers de la lumière incidente, parviendrait au troisième film disposé sous les deux premiers, ce qui conduirait à une baisse sensible de la luminosité des informations affichées par ce troisième film.

D'autres caractéristiques et avantages de la présente invention apparaîtront plus clairement à la lecture de la description détaillée qui suit d'un exemple de réalisation du dispositif optique selon l'invention, cet exemple étant donné à titre purement illustratif et non limitatif, en liaison avec les dessins annexés dans lesquels :
- la figure 1, déjà citée, est une vue en coupe dans un dispositif de l'art antérieur comprenant quatre cellules à cristaux liquides cholestériques superposées pouvant réfléchir 100% d'une première et d'une deuxième bandes de longueurs d'ondes correspondant chacune à une couleur déterminée;
- la figure 2 est une vue en coupe dans un dispositif optique selon l'invention comprenant deux cellules à cristaux liquides cholestériques superposées pouvant réfléchir 100% d'une première et d'une deuxième bandes de longueurs d'ondes correspondant chacune à une couleur déterminée;
- la figure 3 est une vue en coupe dans un dispositif optique de l'art antérieur comprenant trois cellules à cristaux liquides cholestériques superposées réfléchissant 50% d'une première, d'une seconde et d'une troisième bandes de longueurs d'ondes correspondant chacune à une couleur déterminée, par exemple le bleu, le vert et le rouge;
- la figure 4 est une vue en coupe dans un dispositif optique selon l'invention comprenant trois cellules à cristaux liquides cholestériques superposées pouvant réfléchir 100% d'une première, d'une seconde et d'une troisième bandes de longueurs d'ondes correspondant chacune à une couleur déterminée, par exemple le bleu, le vert et le rouge;
- la figure 5 est une vue de détail d'un dispositif d'affichage selon l'invention comprenant deux films de cristaux liquides cholestériques;
- la figure 6 est une vue d'une variante de réalisation du dispositif d'affichage selon l'invention, et
- la figure 7 est une vue d'une variante de réalisation du dispositif d'affichage représenté à la figure 6.

La présente invention procède de l'idée générale inventive qui consiste à encapsuler séparément un cristal liquide cholestérique présentant une structure périodique en hélice à droite et un cristal liquide cholestérique présentant une structure périodique en hélice à gauche, puis à former des films au moyen des deux types de capsules résultant de l'opération d'encapsulage, de sorte que ces films soient aptes à réfléchir simultanément les polarisations circulaires gauche et droite d'une première et d'une deuxième lumières incidentes.

Grâce à ces caractéristiques, la quantité de lumière réfléchie par les films est voisine de 100%, ce qui permet d'obtenir un affichage lumineux et contrasté. D'autre part, la présente invention permet de réduire de moitié le nombre de cellules nécessaires pour atteindre ce but. A titre d'exemple, les dispositifs de l'art antérieur nécessitaient quatre cellules à cristaux liquides cholestériques superposées pour pouvoir réfléchir 100% d'une première et d'une seconde bandes de longueurs d'ondes, deux de ces cellules contenant un cristal liquide à hélice à gauche qui réfléchissait la lumière polarisée circulairement à gauche, tandis que les deux autres cellules contenaient un cristal liquide à hélice à droite réfléchissant la lumière polarisée circulairement à droite. Grâce à la présente invention, deux films seulement contentant chacun deux types de capsules sont capables de réfléchir 100% d'une première et d'une seconde couleurs déterminées.

Dans tout ce qui suit (description et figures), on désigne par λ(L,R) la lumière naturelle non polarisée correspondant à une bande de longueurs d'ondes déterminée. On désignera d'autre part par λ(L) la lumière polarisée circulairement à gauche (la lettre "L" est l'abréviation de l'expression anglaise "left"), et on désignera par λ(R) la lumière polarisée circulairement à droite (la lettre "R" est l'abréviation de l'expression anglaise "right").

On notera également que, pour des raisons de clarté, on n'a représenté sur les figures qui sont des vues en coupe des différentes variantes de réalisation du dispositif optique selon l'invention, qu'une partie des capsules contenant les cristaux liquides. Il va de soi que les films formés par ces capsules remplissent tout le volume délimité par les substrats des cellules formant ces dispositifs optiques.

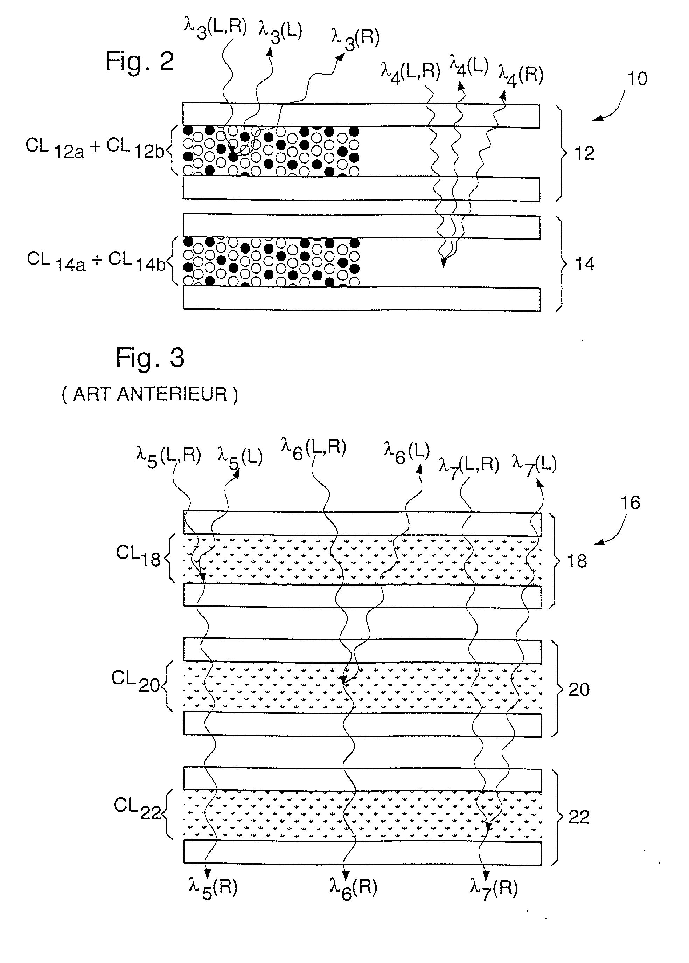

La figure 2 est une vue en coupe dans un dispositif optique selon l'invention désigné dans son ensemble par la référence numérique générale 10. Ce dispositif optique 10 est destiné à réfléchir 100% d'une première et d'une seconde bandes de longueurs d'ondes correspondant chacune à une couleur déterminée, respectivement λ₃ et λ₄. A cet effet, le dispositif optique 10 comporte une première cellule 12 comprenant un film ou couche formée d'un mélange d'une première et d'une seconde pluralités de capsules d'un cristal liquide cholestérique, respectivement CL₁₂ₐ et CL_{12b}. Conformément à l'invention, les cristaux liquides cholestériques CL₁₂ₐ et CL_{12b} contenus dans la première et la seconde pluralités de capsules respectivement présentent une valeur du pas de l'hélice qui est ajustée de façon à ce que lesdits cristaux liquides cholestériques CL₁₂ₐ et CL_{12b} réfléchissent la longueur d'onde λ₃. Le dispositif optique 10 comporte une seconde cellule 14 comprenant un film ou couche formée d'un mélange d'une troisième et d'une quatrième pluralités de capsules d'un cristal liquide cholestérique, respectivement CL₁₄ₐ et CL_{14b}. Les cristaux liquides cholestériques CL₁₄ₐ et CL_{14b} contenus dans la troisième et la quatrième pluralités de capsules respectivement présentent une valeur du pas de l'hélice qui est ajustée de façon à ce que lesdits cristaux liquides cholestériques CL₁₄ₐ et CL_{14b} réfléchissent la longueur d'onde λ₄.

Plus précisément, le cristal liquide cholestérique CL₁₂ₐ contenu dans la première pluralité de capsules présente une structure périodique en hélice ayant un premier sens de rotation, par exemple à gauche, et le cristal liquide cholestérique CL_{12b} contenu dans la seconde pluralité de capsules présente une structure périodique en hélice ayant un second sens de rotation opposé au premier, c'est-à-dire à droite dans le présent exemple.

La première pluralité de capsules réfléchit ainsi la lumière λ₃(L) qui a la polarisation circulaire ayant le même sens de rotation que celui du cristal liquide CL₁₂ₐ contenu dans ladite première pluralité de capsules, c'est-à-dire la lumière polarisée circulairement à gauche. Quant à la seconde pluralité de capsules, elle réfléchit la lumière λ₃(R) qui a la polarisation circulaire ayant un sens de rotation identique à celui du cristal liquide CL_{12b} contenu dans ladite seconde pluralité de capsules, c'est-à-dire la lumière polarisée circulairement à droite.

Dans le même temps, le cristal liquide cholestérique CL₁₄ₐ contenu dans la troisième pluralité de capsules présente une structure périodique en hélice ayant un premier sens de rotation, par exemple à gauche, et le cristal liquide cholestérique CL_{14b} contenu dans la quatrième pluralité de capsules présente une structure périodique en hélice ayant un second sens de rotation opposé au premier, c'est-à-dire à droite dans le présent exemple.

La troisième pluralité de capsules réfléchit par conséquent la lumière λ₄(L) qui a la polarisation circulaire ayant le même sens de rotation que celui du cristal liquide CL₁₄ₐ contenu dans ladite troisième pluralité de capsules, c'est-à-dire la lumière polarisée circulairement à gauche. En ce qui concerne la quatrième pluralité de capsules, elle réfléchit la lumières λ₄(R) qui a la polarisation circulaire ayant un sens de rotation identique à celui du cristal liquide CL_{14b} contenu dans ladite quatrième pluralité de capsules, c'est-à-dire la lumière polarisée circulairement à droite.

Grâce à ces caractéristiques, les deux polarisations circulaires gauche λ₃(L) et droite λ₃(R) d'une même partie du spectre optique correspondant à une première couleur λ₃ déterminée, et les deux polarisations circulaires gauche λ₄(L) et droite λ₄(R) d'une même partie du spectre optique correspondant à une seconde couleur λ₄ déterminée, sont simultanément réfléchies par les films de cristaux liquides CL_{12a,} CL_{12b} d'une part, et CL₁₄ₐ et CL_{14b} d'autre part. Ce résultat est obtenu à l'aide de deux cellules 12 et 14 seulement, ce qui permet d'obtenir un dispositif optique à la fois moins encombrant, moins coûteux à fabriquer et plus simple à commander électriquement. Il faut, en effet, garder présent à l'esprit le fait qu'avec les formes d'exécution de l'art antérieur, il aurait fallu un empilement de quatre cellules distinctes pour aboutir au même résultat.

La figure 3 est une vue en coupe dans un dispositif de l'art antérieur désigné dans son ensemble par la référence numérique générale 16. Ce dispositif optique 16 est destiné à réfléchir 50% d'une première, d'une seconde et d'une troisième bandes de longueurs d'ondes correspondant chacune à une couleur déterminée, respectivement λ₅, λ₆ et λ₇ qui peuvent être, par exemple, le bleu, le rouge et le vert. A cet effet, le dispositif optique comporte trois cellules superposées 18, 20 et 22, la cellule 18 étant la cellule supérieure, et la cellule 22 étant la cellule inférieure. Chacune de ces trois cellules 18, 20 et 22 comprend un film ou couche de cristaux liquides à texture cholestérique, respectivement CL₁₈, CL₂₀ et CL₂₂. Comme dans les exemples précédents, la valeur du pas de l'hélice des cristaux liquides CL₁₈, CL₂₀ et CL₂₂ a été ajustée de façon à ce qu'ils réfléchissent respectivement les longueurs d'ondes λ₅, λ₆ et λ₇.

Plus précisément, l'hélice du cristal liquide cholestérique CL₁₈ contenu dans la cellule supérieure 18 a un sens de rotation arbitrairement choisi, à gauche ou à droite. De même, l'hélice des cristaux liquides cholestériques CL₂₀ et CL₂₂ contenus dans les cellules 20 et 22 a un sens de rotation arbitrairement choisi, à gauche ou à droite.

La couche de cristal liquide CL₁₈ va donc réfléchir la lumière λ₅ qui a la polarisation circulaire ayant un sens de rotation identique à celui dudit cristal liquide CL₁₈ contenu dans la cellule supérieure 18, tandis que la polarisation circulaire opposée de la lumière λ₅ va être transmise sans modification par ladite cellule supérieure 18 et traverser, toujours sans être modifiée, les cellules 20 et 22.

La couche de cristaux liquides CL₁₈ étant sans effet sur la bande de longueurs d'ondes correspondant à la couleur λ₆, celle-ci va traverser sans modification la cellule supérieure 18 et être partiellement réfléchie par la cellule 20. En effet, la couche de cristal liquide CL₂₀ va réfléchir la lumière λ₆ qui a la polarisation circulaire ayant un sens de rotation identique à celui dudit cristal liquide CL₂₀ contenu dans la cellule 20, tandis que la polarisation opposée de la lumière λ₆ va être transmise par la cellule 20 sans modification et traverser la cellule inférieure 22 également sans modification.

Enfin, les couches de cristaux liquides CL₁₈ et CL₂₀ étant sans effet sur la bande de longueurs d'ondes correspondant à la couleur λ₇, celle-ci va traverser sans modification les cellules 18 et 20 et être partiellement réfléchie par la cellule 22. En effet, la couche de cristal liquide CL₂₂ va réfléchir la lumière λ₇ qui a la polarisation circulaire ayant un sens de rotation identique à celui dudit cristal liquide CL₂₂ contenu dans la cellule 22, tandis que la polarisation opposée de la lumière λ₇ va être transmise par la cellule 22 sans modification.

En conséquence, le dispositif de l'art antérieur permet, au moyen de trois cellules 18, 20 et 22 superposées, de réfléchir 50% d'une première, d'une deuxième et d'une troisième bandes de longueurs d'ondes correspondant chacune à une couleur λ₅, λ₆ et λ₇ déterminée.

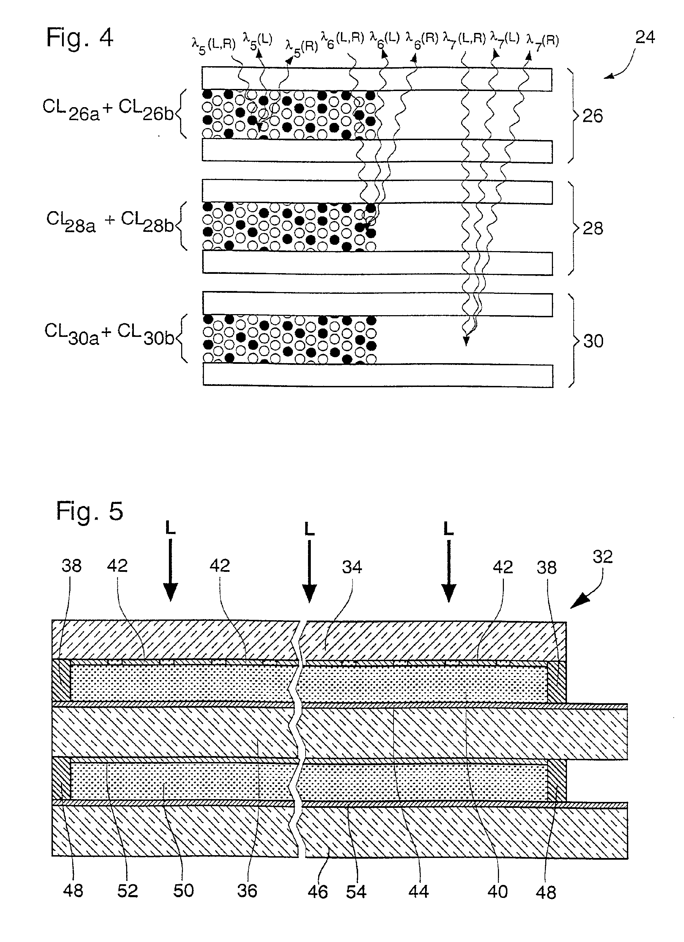

La figure 4 est une vue en coupe dans un dispositif optique selon l'invention désigné dans son ensemble par la référence numérique générale 24. Ce dispositif optique 24 est destiné à réfléchir 100% d'une première, d'une deuxième et d'une troisième bandes de longueurs d'ondes correspondant chacune à une couleur déterminée, respectivement λ₅, λ₆ et λ₇, mentionnées ci-dessus. A cet effet, le dispositif optique 24 comporte trois cellules superposées 26, 28 et 30, la cellule 26 étant la cellule supérieure, et la cellule 30 étant la cellule inférieure.

La cellule supérieure 26 comprend un film ou couche de cristaux liquides formée d'un mélange d'une première et d'une seconde pluralités de capsules d'un cristal liquide cholestérique, respectivement CL₂₆ₐ et CL_{26b}.

La cellule 28 comprend quant à elle un film ou couche de cristaux liquides formée d'un mélange d'une troisième et d'une quatrième pluralités de capsules d'un cristal liquide cholestérique, respectivement CL₂₈ₐ et CL_{28b}.

Enfin, la cellule 30 comprend un film ou couche de cristaux liquides formée d'un mélange d'une cinquième et d'une sixième pluralités de capsules d'un cristal liquide cholestérique, respectivement CL₃₀ₐ et CL_{30b}.

Conformément à l'invention, les cristaux liquides encapsulés CL₂₆ₐ et CL_{26b} contenus dans la cellule supérieure 26 présentent une valeur du pas de l'hélice qui est ajustée de façon à ce que lesdits cristaux liquides cholestériques CL₂₆ₐ et CL_{26b} réfléchissent la longueur d'onde λ₅. De même, les cristaux liquides encapsulés CL₂₈ₐ et CL_{28b} contenus dans la cellule 28 présentent une valeur du pas de l'hélice qui est ajustée de façon à ce que lesdits cristaux liquides cholestériques CL₂₈ₐ et CL_{28b} réfléchissent la longueur d'onde λ₆. Enfin, les cristaux liquides encapsulés CL₃₀ₐ et CL_{30b} contenus dans la cellule inférieure 30 présentent une valeur du pas de l'hélice qui est ajustée de façon à ce que lesdits cristaux liquides cholestériques CL₃₀ₐ et CL_{30b} réfléchissent la longueur d'onde λ₇.

Plus précisément, le cristal liquide cholestérique CL₂₆ₐ contenu dans la première pluralité de capsules présente une structure périodique en hélice ayant un premier sens de rotation, par exemple à gauche, et le cristal liquide cholestérique CL_{26b} contenu dans la seconde pluralité de capsules présente une structure périodique en hélice ayant un second sens de rotation opposé au premier, c'est-à-dire à droite dans le présent exemple.

La première pluralité de capsules de cristal liquide cholestérique CL₂₆ₐ réfléchit ainsi la lumière λ₅(L) qui a la polarisation circulaire ayant le même sens de rotation que celui dudit cristal liquide CL₂₆ₐ contenu dans ladite première pluralité de capsules, c'est-à-dire la lumière polarisée circulairement à gauche. Quant à la seconde pluralité de capsules de cristal liquide cholestérique CL_{26b}, elle réfléchit la lumière λ₅(R) qui a la polarisation circulaire ayant un sens de rotation identique à celui dudit cristal liquide CL_{26b}, c'est-à-dire la lumière polarisée circulairement à droite.

Dans le même temps, le cristal liquide cholestérique CL₂₈ₐ contenu dans la troisième pluralité de capsules présente une structure périodique en hélice ayant un premier sens de rotation, par exemple à gauche, et le cristal liquide cholestérique CL_{28b} contenu dans la quatrième pluralité de capsules présente une structure périodique en hélice ayant un second sens de rotation opposé au premier, c'est-à-dire à droite dans le présent exemple.

La troisième pluralité de capsules de cristal liquide CL₂₈ₐ réfléchit par conséquent la lumière λ₆(L) qui a la polarisation circulaire ayant le même sens de rotation que celui dudit cristal liquide CL₂₈ₐ, c'est-à-dire la lumière polarisée circulairement à gauche. En ce qui concerne la quatrième pluralité de capsules de cristal liquide CL_{28b}, elle réfléchit la lumière λ₆(R) qui a la polarisation circulaire ayant un sens de rotation identique à celui dudit cristal liquide CL_{28b}, c'est-à-dire la lumière polarisée circulairement à droite.

De façon analogue à ce qui vient d'être décrit ci-dessus, le cristal liquide cholestérique CL₃₀ₐ contenu dans la cinquième pluralité de capsules présente une structure périodique en hélice ayant un premier sens de rotation, par exemple à gauche, et le cristal liquide cholestérique CL_{30b} contenu dans la sixième pluralité de capsules présente une structure périodique en hélice ayant un second sens de rotation opposé au premier, c'est-à-dire à droite dans le présent exemple.

La cinquième pluralité de capsules de cristal liquide CL₃₀ₐ réfléchit donc la lumière λ₇(L) qui a la polarisation circulaire ayant le même sens de rotation que celui dudit cristal liquide CL₃₀ₐ, c'est-à-dire la lumière polarisée circulairement à gauche, et la sixième pluralité de capsules de cristal liquide CL_{30b} réfléchit la lumière λ₇(R) qui a la polarisation circulaire ayant un sens de rotation identique à celui dudit cristal liquide CL_{30b}, c'est-à-dire la lumière polarisée circulairement à droite.

Comme on l'aura compris, les couches de cristaux liquides sont sans effet sur les bandes de longueurs d'ondes autres que celle qu'elles sont destinées à réfléchir. Ainsi, la cellule 26 qui contient le couple de cristaux liquides CL₂₆ₐ, CL_{26b} dont la valeur du pas de l'hélice est ajustée pour réfléchir la longueur d'onde λ₅ est insensible aux longueurs d'ondes λ₆ et λ₇. De même, la cellule 28 qui contient le couple de cristaux liquides CL₂₈ₐ, CL_{28b} dont la valeur du pas de l'hélice est ajustée pour réfléchir la longueur d'onde λ₆ est insensible aux longueurs d'ondes λ₅ et λ₇. Quant à la cellule 30 qui contient les cristaux liquides CL₃₀ₐ et CL_{30b}, elle réfléchit uniquement la bande de longueurs d'ondes λ₇ et est sans effet sur les bandes de longueurs d'ondes λ₅ et λ₆.

Grâce à ces caractéristiques, on obtient un affichage trichrome capable de réfléchir la majeur partie des polarisations circulaires gauche et droite d'une première, d'une seconde et d'une troisième bandes de longueurs d'ondes correspondant chacune à une couleur λ₅, λ₆ et λ₇ déterminée. Par rapport à l'art antérieur, on double sensiblement la quantité de lumière réfléchie par le dispositif optique tout en conservant le même nombre de cellules d'affichage. Les caractères affichés sont donc beaucoup plus lumineux et plus contrastés et se détachent facilement du fond sur lequel ils s'affichent.

On va maintenant décrire en liaison avec la figure 5 un dispositif optique 32 du genre mentionné ci-dessus qui constitue un réflecteur de Bragg.

Le dispositif optique 32 comporte un premier substrat transparent 34 disposé sur un côté avant, c'est-à-dire du côté qui reçoit une lumière incidente symbolisée par les flèches L, et un deuxième substrat 36 disposé sur un côté arrière, de sorte que le substrat 36 s'étend en regard du substrat avant 34 et parallèlement à ce dernier.

Les substrats 34 et 36 peuvent être réalisés en verre ou en une matière plastique. Ils sont reliés par l'intermédiaire d'un cadre de scellement 38 afin de délimiter entre eux une cavité pour contenir un film ou couche 40 de cristaux liquides de type cholestérique. Le film 40 est, conformément à l'invention, constitué d'un mélange d'une première et d'une seconde pluralités de capsules contenant le cristal liquide cholestérique.

La surface du substrat 34 tournée vers le substrat 36 porte un premier groupe d'électrodes 42. La surface du substrat 36 tournée vers le substrat 34 comprend un deuxième groupe d'électrodes 44 disposées, par exemple, sous forme de bandes perpendiculaires aux électrodes 42. Chacune des électrodes 42 et 44 peut être formée par une bande conductrice déposée et structurée par des techniques classiques, et réalisée de préférence en oxyde d'étain-indium (ITO). Le dispositif optique 32 est connecté de manière connue à un circuit de commande des électrodes 42 et 44, ce circuit pouvant fournir des tensions de commande appropriées à des électrodes sélectionnées pour modifier les conditions optiques du cristal liquide encapsulé situé au point de croisement des électrodes 42 et 44 considérées, c'est-à-dire le commuter dans un état où il est réfléchissant ou dans un état où il est transparent.

Comme on peut le voir sur la figure 5, le dispositif optique 32 comprend en outre un troisième substrat 46 disposé à la suite du substrat 36. Les substrats 36 et 46 sont reliés par l'intermédiaire d'un cadre de scellement 48 qui délimite entre eux une nouvelle cavité pour contenir un second film ou couche 50 de cristaux liquides cholestériques. La surface du substrat 36 tournée vers le substrat 46 porte un troisième groupe d'électrodes 52, et la surface du substrat 46 tournée vers le substrat 36 porte un quatrième groupes d'électrodes 54.

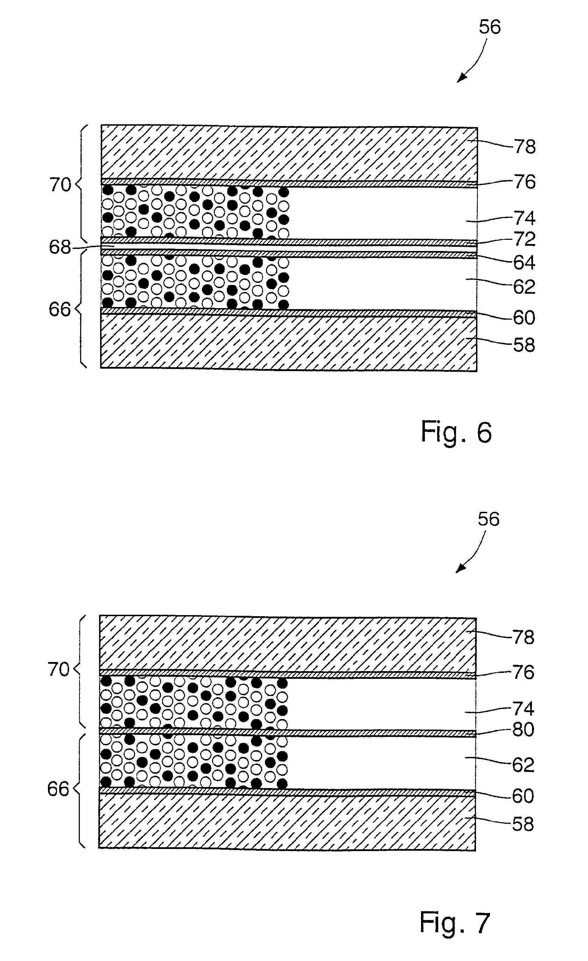

La figure 6 est une vue d'une variante de réalisation du dispositif optique selon l'invention. Ce dispositif optique, désigné dans son ensemble par la référence numérique générale 56, comporte un substrat de base 58 réalisé en verre ou en une matière plastique. La surface du substrat 58 tournée vers le haut porte un premier jeu d'électrodes 60 formées, comme ci-dessus, par des techniques classiques, et réalisées préférentiellement en oxyde d'étain-indium (ITO). Un film ou couche 62 constitué d'un mélange d'une première et d'une seconde pluralités de capsules d'un cristal liquide cholestérique est déposé, par exemple par sérigraphie, sur le groupe d'électrodes 60. Ces capsules sont mélangées avec un liant du genre polymère pour former la couche 62. Après polymérisation de la couche 62 de capsules, on dépose sur cette couche 62 un deuxième groupe d'électrodes 64. On forme de cette manière une première cellule 66 à cristaux liquides qui, reliée à un circuit de commande approprié, permet de modifier les conditions optiques du cristal liquide encapsulé, c'est-à-dire le faisant passer d'un état dans lequel il réfléchit, par réflexion de Bragg, la bande de longueurs d'ondes correspondant à une couleur déterminée par le pas de l'hélice dudit cristal liquide, à un état transparent. Sur le deuxième groupe d'électrodes 64 est déposée une couche isolante 68. On répète ensuite pour une deuxième cellule 70 les opérations décrites ci-dessus pour la première cellule 66, à savoir :
- former un troisième groupe d'électrodes 72 sur la couche isolante 68;
- recouvrir le troisième groupe d'électrodes 72 d'une couche ou film 74 constitué d'un mélange d'une troisième et d'une quatrième pluralités de capsules d'un cristal liquide cholestérique réfléchissant une seconde bande de longueurs d'ondes correspondant à une couleur déterminée par le pas de l'hélice du cristal liquide encapsulé;
- polymériser la couche 74 de capsules de cristal liquide, et
- déposer un quatrième jeu d'électrodes 76 sur la couche 74 polymérisée.

Finalement, on dépose un substrat 78 en verre ou en plastique sur le groupe d'électrodes 76, ou simplement une couche de vernis.

On comprendra que ce mode de réalisation a, par rapport au mode de réalisation décrit en liaison avec la figure 5, comme avantage de ne nécessiter qu'un substrat de base et, le cas échéant, un substrat avant disposé du côté qui reçoit la lumière. Entre ces deux substrats, aucun substrat supplémentaire n'est nécessaire, dans la mesure où les couches formées par les capsules de cristal liquide sont solides et ne risquent donc pas de s'interpénétrer. Par ailleurs, comme ces couches présentent également une certaine rigidité mécanique, les jeux d'électrodes peuvent être déposés directement sur elles. En conséquence, un tel mode de réalisation a le double avantage de procurer un dispositif optique conforme à l'invention qui est moins encombrant et moins coûteux à fabriquer.

Selon une variante de réalisation représentée à la figure 7 dans laquelle les éléments identiques à ceux de la figure 6 sont désignés par les mêmes références numériques, la première et la seconde cellules, respectivement 66 et 70, ont un groupe d'électrodes 80 en commun. Ce groupe d'électrodes 80 est déposé sur la couche de capsules 62, puis directement recouvert par la couche de capsules 74. Il remplace les deux groupes d'électrodes 64 et 72 décrits précédemment. Par application de tensions appropriées à des électrodes sélectionnées pour modifier les conditions optiques du cristal liquide situé aux points de croisement des électrodes considérées 60 et 80 d'une part, et 76 et 80 d'autre part, on peut donc commander les cellules 66 et 70 indépendamment l'une de l'autre ou, comme c'est le plus souvent le cas, simultanément. Comme on peut s'affranchir de l'un des deux jeux d'électrodes 64 ou 72 ainsi que de la couche isolante 68, on procure une double cellule d'affichage 56 simplifiée et donc moins coûteuse à produire.

Selon une caractéristique complémentaire de l'invention, l'indice de réfraction ordinaire nₒ du cristal liquide cholestérique est sensiblement égal à l'indice de réfraction optique n_{c} de la matière dont sont faites les capsules dans lesquelles le cristal liquide cholestérique est encapsulé, cet indice de réfraction n_{c} étant lui-même sensiblement égal à l'indice de réfraction optique nₚ du polymère dans lequel sont dispersées lesdites capsules. Cette condition permet de garantir que les films ou couches formées par les capsules de cristal liquide sont suffisamment transparentes lorsque le cristal liquide est dans l'état où il est transparent pour ne pas engendrer de pertes optiques trop élevées.

Il va de soi que l'invention n'est pas limitée aux modes de réalisation qui viennent d'être décrits, et que des modifications et des variantes peuvent être envisagées sans sortir du cadre de l'invention.

## Revendications

1. Dispositif optique (10) à réflexion de Bragg pour réfléchir au moins une première et une seconde parties du spectre visible correspondant chacune à une couleur (λ_{3,} λ₄) déterminée présente dans une lumière incidente, **caractérisé en ce qu'**il comprend au moins un premier film formé d'un mélange d'une première et d'une seconde pluralités de capsules d'un cristal liquide cholestérique (CL₁₂ₐ, CL_{12b}), et au moins un second film (14) formé d'un mélange d'une troisième et d'une quatrième pluralités de capsules d'un cristal liquide cholestérique (CL₁₄ₐ, CL_{14b}), les cristaux liquides (CL₁₂ₐ, CL_{12b}) contenus respectivement dans la première et dans la seconde pluralités de capsules présentant une structure périodique en hélice dont la valeur du pas est ajustée de façon à ce que lesdits cristaux liquides (CL₁₂ₐ, CL_{12b}) réfléchissent la bande de longueurs d'ondes centrée sur la longueur d'onde (λ₃) correspondant à la première couleur déterminée, et les cristaux liquides (CL₁₄ₐ, CL_{14b}) contenus respectivement dans la troisième et la quatrième pluralités de capsules présentant une structure périodique en hélice dont la valeur du pas est ajustée de façon à ce que lesdits cristaux liquides (CL₁₄ₐ, CL_{14b}) réfléchissent la bande de longueurs d'ondes centrée sur la longueur d'onde (λ₄) correspondant à la seconde couleur déterminée, la structure périodique en hélice du cristal liquide (CL₁₂ₐ) contenu dans ladite première pluralité de capsules ayant un sens de rotation donné, et la structure périodique en hélice du cristal liquide cholestérique (CL_{12b}) contenu dans ladite seconde pluralité de capsules ayant un sens de rotation opposé à celui du cristal liquide cholestérique (CL₁₂ₐ) contenu dans la première pluralité de capsules, de même que la structure périodique en hélice du cristal liquide cholestérique (CL₁₄ₐ) contenu dans ladite troisième pluralité de capsules a un sens de rotation donné, et que la structure périodique en hélice du cristal liquide cholestérique (CL_{14b}) contenu dans ladite quatrième pluralité de capsules a un sens de rotation opposé à celui du cristal liquide cholestérique (CL₁₄ₐ) contenu dans la troisième pluralité de capsules.

2. Dispositif optique selon la revendication 1, **caractérisé en ce qu'**il comprend un premier, un second et un troisième films (26, 28, 30) formés respectivement d'un mélange d'une première et d'une seconde pluralités de capsules d'un cristal liquide cholestérique (CL₂₆ₐ, CL_{26b}), d'un mélange d'une troisième et d'une quatrième pluralités de capsules d'un cristal liquide cholestérique (CL₂₈ₐ, CL_{28b}), et d'un mélange d'une cinquième et d'une sixième pluralités de capsules d'un cristal liquide cholestérique (CL₃₀ₐ, CL_{30b}), les cristaux liquides (CL₂₆ₐ, CL_{26b}) présentant une structure périodique en hélice dont la valeur du pas est ajustée de façon à ce que lesdits cristaux liquides (CL₂₆ₐ, CL_{26b}) réfléchissent une bande de longueurs d'ondes centrée sur une longueur d'onde (λ₅) correspondant à une première couleur déterminée, de même que les cristaux liquides (CL₂₈ₐ, CL_{28b}) réfléchissent une bande de longueurs d'ondes centrée sur une longueur d'onde (λ₆) correspondant à une seconde couleur déterminée, et que les cristaux liquides (CL₃₀ₐ, CL_{30b}) réfléchissent une bande de longueurs d'ondes centrée sur une longueur d'onde (λ₇) correspondant à une troisième couleur déterminée, la structure périodique en hélice des cristaux liquides (CL₂₆ₐ, CL₂₈ₐ, CL₃₀ₐ) contenus respectivement dans les première, troisième et cinquième pluralités de capsules ayant un sens de rotation donné, et la structure périodique en hélice des cristaux liquides (CL_{26b}, CL_{28b}, CL_{30b}) contenus respectivement dans les deuxième, quatrième et sixième pluralités de capsules ayant un sens de rotation opposé à celui des cristaux liquides (CL₂₆ₐ, CL₂₈ₐ, CL₃₀ₐ) respectivement.

3. Dispositif optique selon l'une quelconque des revendications 1 ou 2, **caractérisé en ce que** l'indice de réfraction optique ordinaire (nₒ) des cristaux liquides cholestériques est sensiblement égal à l'indice de réfraction optique (n_{c}) de la matière dont sont faites les capsules dans lesquelles les cristaux liquides cholestériques sont encapsulés, cet indice de réfraction (n_{c}) étant lui-même sensiblement égal à l'indice de réfraction optique (nₚ) du polymère dans lequel sont dispersées lesdites capsules.

4. Dispositif optique selon l'une quelconque des revendications 1 à 3, **caractérisé en ce qu'**il comprend un premier substrat transparent (34) disposé sur un côté avant, c'est-à-dire du côté qui reçoit une lumière incidente, et un deuxième substrat (36) s'étendant en regard du substrat avant (34) et parallèlement à ce dernier, les substrats (34, 36) étant reliés entre eux par l'intermédiaire d'un cadre de scellement (38) délimitant une cavité pour contenir un film ou couche (40) de capsules de cristaux liquides de type cholestérique, les faces en regard des substrats (34, 36) portant respectivement un premier et un second groupes d'électrodes (42, 44), le dispositif optique comprenant en outre au moins un troisième substrat (46) disposé à la suite du substrat (36) et relié à celui-ci par une cadre de scellement (48) délimitant une cavité pour contenir un film ou couche (50) de capsules de cristaux liquides cholestériques, les faces en regard des substrats (36, 46) portant respectivement un troisième et un quatrième groupes d'électrodes (52, 54).

5. Dispositif selon l'une quelconque des revendications 1 à 3, **caractérisé en ce qu'**il comprend un substrat de base (58) dont la surface tournée vers le haut porte un premier jeu d'électrodes (60), un film ou couche (62) constitué d'un mélange d'une première et d'une seconde pluralités de capsules d'un cristal liquide cholestérique étant déposé sur le groupe d'électrodes (60), puis un deuxième groupe d'électrodes (64) et une couche isolante (68) étant déposés successivement sur la couche (62) de capsules de cristal liquide, un troisième jeu d'électrodes (72) étant ensuite formé sur la couche isolante (68) puis recouvert d'un film (74) constitué d'un mélange d'une troisième et d'une quatrième pluralités de capsules d'un cristal liquide cholestérique, et d'un quatrième jeu d'électrodes (76), un substrat (78) ou une couche de vernis étant finalement déposé sur le quatrième jeu d'électrodes (78).

6. Dispositif selon l'une quelconque des revendications 1 à 3, **caractérisé en ce qu'**il comprend un substrat de base (58) dont la surface tournée vers le haut porte un premier jeu d'électrodes (60), un film ou couche (62) constitué d'un mélange d'une première et d'une seconde pluralités de capsules d'un cristal liquide cholestérique étant déposé sur le groupe d'électrodes (60), puis un deuxième groupe d'électrodes (80) étant déposé sur la couche (62) de capsules de cristal liquide, ce deuxième groupe d'électrodes (80) étant ensuite successivement recouvert par un film (74) constitué d'un mélange d'une troisième et d'une quatrième pluralités de capsules d'un cristal liquide cholestérique, et par un jeu d'électrodes (76), un substrat (78) ou une couche de vernis étant finalement déposé sur le jeu d'électrodes (76).
